(19) **Europäisches Patentamt European Patent Office Office européen des brevets**

(11) **EP 1 263 635 B1**

(12) **EUROPÄISCHE PATENTSCHRIFT**

(45) Veröffentlichungstag und Bekanntmachung des Hinweises auf die Patenterteilung:
**14.10.2009   Patentblatt 2009/42**

(51) Int Cl.:
***B60T 8/00*** *(2006.01)*

(21) Anmeldenummer: **01909544.7**

(22) Anmeldetag: **31.01.2001**

(86) Internationale Anmeldenummer:
**PCT/DE2001/000357**

(87) Internationale Veröffentlichungsnummer:
**WO 2001/066393 (13.09.2001 Gazette 2001/37)**

(54) **VERFAHREN UND VORRICHTUNG ZUR ERMITTLUNG EINES KENNWERTES EINER RADBREMSE**

METHOD AND DEVICE FOR DETERMINATION OF A WHEEL BRAKE PARAMETER

PROCEDE ET DISPOSITIF DE DETERMINATION DE LA VALEUR CARACTERISTIQUE D'UN FREIN DE ROUE

(84) Benannte Vertragsstaaten:
**DE FR GB**

(30) Priorität: **08.03.2000   DE 10011270**

(43) Veröffentlichungstag der Anmeldung:
**11.12.2002   Patentblatt 2002/50**

(73) Patentinhaber: **ROBERT BOSCH GMBH**
**70442 Stuttgart (DE)**

(72) Erfinder:
• **RADER, Thomas**
**72764 Reutlingen (DE)**
• **GLASSTETTER, Thomas**
**75038 Oberderingen (DE)**

(56) Entgegenhaltungen:
**DE-A- 3 909 588          US-A- 5 312 170**

EP 1 263 635 B1

**Beschreibung**

Stand der Technik

Die Erfindung betrifft ein Verfahren und eine Vorrichtung zur Ermittlung eines Kennwertes einer Radbremse.

In modernen Steuersystemen für Bremsanlagen werden vielfach bremsenspezifische Kennwerte verwendet. Ein wesentlicher Kennwert ist dabei die Proportionalitätskonstante zwischen dem an der Radbremse ausgeübten Bremsmoment bzw. der ausgeübten Bremskraft und des eingesteuerten Bremsdrucks. Diese Größe wird beispielsweise bei den bekannten Fahrdynamikregelsystemen eingesetzt. Ein derartiges Regelsystem ist in der Veröffentlichung SAE-Paper 950759 "VDC - the vehicle dynamics control system of Bosch" von Anton van Zanten, Reiner Erhardt und Georg Pfaff beschrieben. Dort werden die vom Regelsystem ermittelten Sollbremsmomente für ein Rad unter Verwendung des Proportionalitätsfaktors CP in Solldruckwerte umgesetzt, wobei der Proportionalitätsfaktor CP den bremsenspezifischen Zusammenhang zwischen Bremsmoment und Bremsdruck beschreibt. Ferner dienen die Bremsenkennwerte im Rahmen des Hydraulikmodell auch zur Bestimmung der Bremsdrücke aus den Ansteuersignalen für die Ventile, so dass die Kennwerte Einfluss auf die Genauigkeit der Steuerung haben. Eine Rolle spielen die Kennwerte auch bei der Ermittlung des Radverhalten (z.B. bei Methoden zur Schlupfberechnung, etc.) und daraus abgeleiteter Größen.

Entsprechendes gilt auch für elektrisch gesteuerte Bremssysteme, bei welchem die am Rad ausgeübte Bremskraft bzw. das Bremsmoment in Abhängigkeit des Betätigungsgrades eines vom Fahrer betätigbaren Bedienelements, insbesondere eines Bremspedals mittels eines elektronischen Reglers eingestellt wird. Ein Beispiel hierfür ist die DE 196 48 936 A1. Auch hier werden die Bremsenkennwerte bei der Steuerung der Radbremsen ausgewertet.

Es hat sich gezeigt, dass die Bremsenkennwerte der Radbremsen nicht konstant sind, vielmehr in Abhängigkeit vom Alter der Bremse, dem Zustand der Bremsscheibe und der Temperatur sich verändern. Grund für die Veränderung ist, dass die genannten Umstände zu einer Änderung im Reibwert zwischen Bremsbelag und Bremsscheibe bzw. Trommel führen und somit den Zusammenhang zwischen Bremsdruck und ausgeübter Bremskraft bzw. Bremsmoment beeinflussen. Würden der Bremsenkennwerte als konstant angenommen, würde es bei den Berechnungen, die diese Kennwerte verwenden, zu in einigen Anwendungen unerwünschte Ungenauigkeiten kommen, oder eine Fehleinschätzung des Radverhaltens zur Folge haben.

Daher zeigt die oben genannte DE 196 48 936 A1 eine Vorgehensweise, mit deren Hilfe der Bremsenkennwert bzw. die Bremsenkennwerte an die Veränderungen angepaßt werden. Auf der Basis des Kräftegleichgewichtes des Fahrzeugs in Längsrichtung wird dort ein Zusammenhang hergeleitet, nach dem der jeweilige Bremsenkennwert auf der Basis des Bremsdrucks und der Verzögerung des Fahrzeugs ermittelt wird. Bei der dort vorgeschlagenen Methode können die Bremsenkennwerte nur achsweise bestimmt werden.

Aus der gattungsgemäßen DE 39 095 88 A1 ist ein Verfahren zur Bestimmung des Bremsmoments in den Rädern eines gebremsten Fahrzeugs bekannt. Dabei wird ausgehend von dem Bremsdruck an den Rädern und den Radgeschwindigkeiten am Anfang und Ende eines Bremsintervalls ein Proportionalitätsfaktor bestimmt, aus dem sich in Verbindung mit dem Bremsdruck das Bremsmoment ermitteln lässt.


Vorteile der Erfindung

Durch die Bestimmung des Bremsenkennwertes abhängig vom Radschlupf und weiterer radspezifischer Größen wird eine Adaption des Bremsenparameters bereitgestellt, mit deren Hilfe bei vorbestimmten Betriebszuständen eine fortlaufende Anpassung an die jeweilige Fahrsituation und an die Umgebungseinflüsse möglich ist, während außerhalb dieser Betriebszustände der Bremsenkennwert beibehalten wird. Auf diese Weise wird eine genauere Beurteilung des Radverhaltens ermöglicht und eine Verbesserung der Schätzgüte des Bremsdrucks sowie der Regelung bzw. der Steuerung erreicht.

Besonders vorteilhaft ist, dass die Erfassung des Bremsenparameters für jedes Rad allein auf der Basis radspezifischer Größen vorgenommen wird. Dadurch werden radspezifische Veränderung ermittelt, die zu einer weiteren Verbesserung der Genauigkeit der Steuerung führen.

Weitere Vorteile ergeben sich aus der nachfolgenden Beschreibung bzw. aus den abhängigen Patentansprüchen.


Zeichnung

Die Erfindung wird nachstehend anhand der in der Zeichnung dargestellten Ausführungsformen näher erläutert. Figur 1 zeigt ein Übersichtsblockschaltbild einer Steuereinrichtung zur Steuerung der Bremsanlage eines Fahrzeugs. In den Figuren 2 und 3 sind Flussdiagramme skizziert, die ein bevorzugtes Ausführungsbeispiel zur Bestimmung und Auswertung des Bremsenparameters darstellen.

Beschreibung von Ausführungsbeispielen

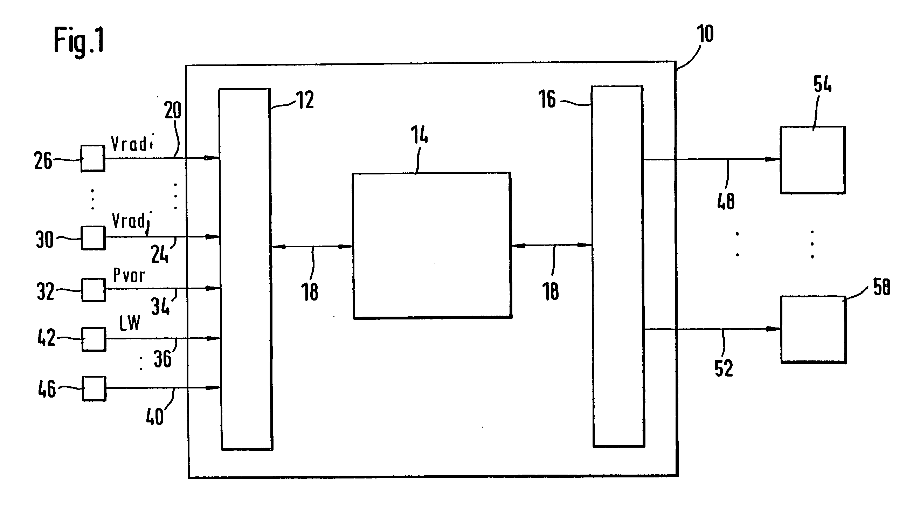

Figur 1 zeigt eine Steuereinheit, welche wenigstens eine Eingangsschaltung 12, einen Mikrocomputer 14 und eine Aus gangsschaltung 16 umfasst. Diese sind über ein Kommunikationssystem 18 zum gegenseitigen Informations- und Datenaustausch miteinander verbunden. Der Eingangsschaltung 12 werden Eingangsleitungen zugeführt, über die der Steuereinheit 10 Signale zugeführt werden, die Betriebsgrößen repräsentieren oder aus denen Betriebsgrößen ableitbar sind. Beispielhaft sind in Figur 1 Eingangsleitungen 20 bis 24 dargestellt, die von entsprechenden Meßeinrichtungen 26 bis 30 Signale übermitteln, welche die Radgeschwindigkeiten VRAD der Räder des Fahrzeugs repräsentieren. Ferner wird von einer Meßeinrichtung 32 über eine Eingangsleitung 34 ein den Vordruck in der Bremsanlage repräsentierende Größe zugeführt, d.h. der Druck, der vom Fahrer durch Betätigen des Bremspedals in die Bremsanlage eingesteuert wird. Ferner sind Eingangsleitungen 36 bis 40 vorgesehen, über die von Meßeinrichtungen 42 bis 46 weitere Größen, die in Verbindung mit den Steuerfunktionen, die die Steuereinheit 10 ausführt, von Interesse sind. Derartige Größen werden beispielsweise im eingangs genannten Stand der Technik erwähnt und können Lenkwinkel, Gierrate, Querbeschleunigung, etc. darstellen. Von der Ausgangsschaltung 16 gehen die Ausgangsleitungen 48 bis 52 aus, die zu Ventil- und/oder Pumpenanordnungen 54 bis 58 führen, welche den einzelnen Radbremsen zugeordnet sind. Die Steuereinheit 10 steuert im Rahmen der von ihr durchgeführten Steuerfunktionen die Ventil- und/oder Pumpenanordnungen an, um den Bremsdruck in den jeweiligen Radbremsen nach Maßgabe der Steuerfunktion zu beeinflussen.

Beispiele für die von der Steuereinheit 10 durch in den Mikrocomputer 14 implementierten Programme durchgeführten Steuerfunktionen sind aus dem eingangs genannten Stand der Technik bekannt. Bei Bremskraft- bzw. Bremsmomentenberechnungen auf der Basis des ermittelten Bremsdrucks und umgekehrt, bei der Umsetzung von Sollmomenten- oder Sollkraftwerten in Bremsdrucksollwerte und/oder bei Berechnungen zur Einschätzung des Radverhaltens werden die Bremsenkennwerte der einzelnen Radbremsen ausgewertet. Diese Faktoren werden vom Aufbau der jeweiligen Bremse festgelegt und setzen sich aus den effektiven Auflageflächen der Bremsbeläge auf den Bremsscheiben, den Abständen der Mitte der Bremsbeläge zur Radmitte und den Reibwerten zwischen Bremsbelag und Bremsscheibe zusammen. Diese Größen sind in der Regel nicht verfügbar bzw. unterliegen Änderungen. Werden typische Werte für den Bremsenkennwert als Konstante angenommen, so ist die Genauigkeit der Berechnungen, die auf der Basis dieses Bremsenkennwertes erfolgen, für einige Anwendungen nicht zufriedenstellend. Es hat sich gezeigt, dass während Phasen, in denen der Druck in der Radbremse bekannt ist, eine Abschätzung des Reibwertes an der Bremse und damit des Bremsenparameters vorgenommen werden kann. Der Druck in der Radbremse ist bekannt, wenn er direkt gemessen oder wenn der Fahrer ohne Regeleingriffe bremst. In diesem Fall ist nämlich der Radbremsdruck gleich dem gemessenen Vordruck, da die vom Fahrer in die hydraulische Bremsanlage eingespeisten Druckwerte ohne Beeinflussung an die Radbremsen geführt werden. Ist dies der Fall, so kann der Bremsenkennwert abhängig von radspezifischen Größen für jedes Rad individuell ermittelt werden. Folgende Formel hat sich als geeignet erwiesen:

$$\mathtt{CP\ =\ (\lambda*FN*RRAD*CLAM)/PRAD\ +\ MMOT/PRAD}$$

Dabei bedeutet λ den Radschlupf, FN die Radaufstandskraft, die beispielsweise gemessen oder abgeschätzt werden kann, RRAD der dynamische Radradius, der als Konstante festgelegt werden kann, CLAM der Proportionalitätsfaktor zwischen Schlupf und Reibwert, der ebenfalls als konstant angenommen werden kann, PRAD der Radbremsdruck, der im vorliegenden Betriebszustand dem gemessenen Vordruck entspricht und MMOT das Antriebsmoment des Motors, welches auf das betrachtete Rad übertragen wird. Für ein nicht angetriebenes Rad fällt der additive Term daher ohne Ersatz weg.

Liegt also die Bedingung, unter der der Bremsenkennwert während einer Bremsung geschätzt werden kann, vor, so werden die einzelnen Bremsenkennwerte gemäß der oben genannten Formel berechnet. Um Störungen auf den verwendeten Signalen entgegenzuwirken, wird anschließend der berechnete Wert noch tiefpaßgefiltert mit einer sehr großen Zeitkonstante. Auf diese Weise werden Ausreißer in der Adaption vermieden.

Liegt der vorstehend beschriebene Betriebszustand zur Adaption des Bremsenkennwertes nicht vor, so wird der bisher berechnete Wert festgehalten.

Obige Formel ist auf der Basis des Momentengleichgewichts am Rad abgeleitet. In einer anderen Ausführungsform wird eine Gleichung eingesetzt, die aus dem Kräftegleichgewicht abgeleitet ist. Die Gleichungen unterscheiden sich lediglich durch eine bremsenspezifische Konstante.

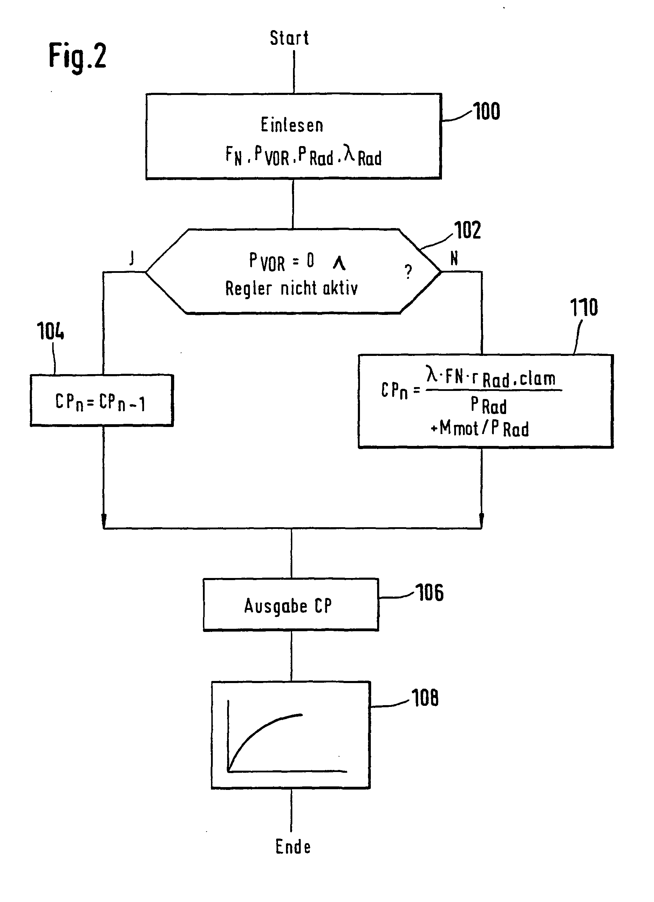

Im bevorzugten Ausführungsbeispiel wird die oben genannte Vorgehensweise als Programm des Mikrocomputers 14 der Steuereinheit 10 realisiert. Ein solches Programm ist in Figur 2 anhand eines Flussdiagramms skizziert.

Nach Start des Programmteils wird für jedes Rad in einem ersten Schritt 100 die notwendigen Größen eingelesen, Radschlupf λRADi, Vordruck PVOR, Aufstandskraft Fni und ggf., wenn verfügbar der Bremsdruck PRADi (gemessen oder mittels des Hydraulikmodells berechnet). Daraufhin wird im Schritt 102 überprüft, ob der Vordruck 0 ist, d.h. der Fahrer nicht bremst und ein ggf. vorhandener Regler nicht aktiv ist, d.h. kein Bremseneingriff stattfindet. Ist dies der Fall, so wird gemäß Schritt 104 der bisherige Bremsenkennwert CP(n-1) festgehalten. Danach wird im Schritt 106 der ermittelte Bremsenkennwert mittels eines Tiefpaßfilters gefiltert und im Schritt 108 ausgegeben. Das Programm wird im nächsten Intervall wiederholt. Hat Schritt 102 gezeigt, dass ein Bremsvorgang vorliegt, so wird im Schritt 110 der Bremsenkennwert CP(n) auf der Basis der oben genannten Formel berechnet. Danach folgt Schritt 106.

Bei der Darstellung nach Figur 2 ist der Radbremsdruck bekannt. Ist dies nicht der Fall, so wird Schritt 110 nur dann eingeleitet, wenn der Vordruck größer als ein bestimmter Grenzwert ist und kein Regler aktiv ist. In diesem Fall ist dann der Radbremsdruck gleich dem gemessenen Vordruck.

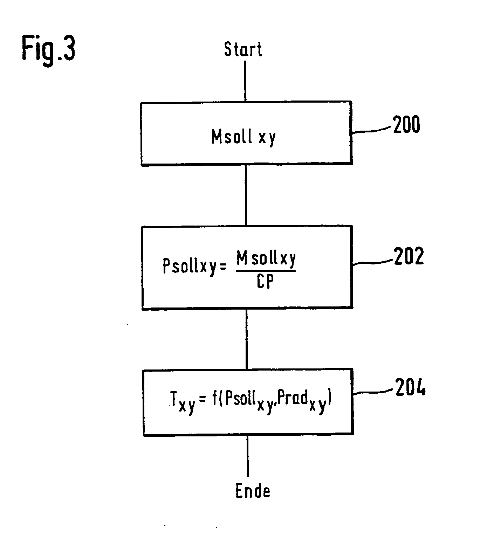

Figur 3 zeigt ein Flussdiagramm, welches eine Möglichkeit der Auswertung des Bremsenkennwertes als Rechnerprogramm darstellt. Danach wird nach Start des Programms im ersten Schritt 200 die ermittelten Bremsensollwerte für die einzelnen Radbremsen MSOLLXY eingelesen. Im darauffolgenden Schritt 202 wird aus der entsprechenden Sollmomentengröße unter Berücksichtigung der adaptierten Bremsenkennwerte CPXY der entsprechende Bremsdrucksollwert PSOLLXY ermittelt. Daraufhin wird im Schritt 204 mittels des aus dem eingangs genannten Stand der Technik bekannten Hydraulikmodell für jede einzelne Radbremse auf der Basis des ermittelten Solldrucks und des geschätzten oder gemessenen Istbremsdrucks die Ansteuerzeiten TXY für die Ventilanordnungen ermittelt.

Die oben beschriebene Vorgehensweise wird unter Verwendung der entsprechenden Größen auch bei pneumatischen Radbremsen oder bei Bremsen mit elektromotorischer Zuspannung eingesetzt. Anstelle des Bremsdrucks wird dabei z.B. eine Stromgröße verwendet, da diese die Steuergröße darstellt, die die Zuspannung bewirkt.

**Patentansprüche**

1. Verfahren zur Ermittlung eines Bremskennwertes einer Radbremse, wobei

   - der Bremskennwert den Zusammenhang zwischen Bremsmoment oder Bremskraft und der Steuergröße einer Radbremse, die die Zuspannung der Radbremse bewirkt, darstellt, und
   - der Bremsenkennwert abhängig von Betriebsgrößen ermittelt wird, und
   - die Ermittlung des Bremsenkennwertes radindividuell erfolgt in Abhängigkeit radspezifischer Größen,

   **dadurch gekennzeichnet, dass**
   eine Veränderung des Bremskennwertes nur in einem vorbestimmten Betriebszustand stattfindet, außerhalb dieses Betriebszustandes der ermittelte Wert des Bremskennwertes beibehalten wird.

2. Verfahren nach Anspruch 1, **dadurch gekennzeichnet, dass** die Steuergröße der Bremsdruck oder eine Ansteuergröße einer elektromotorischen Radbremse ist.

3. Verfahren nach einem der vorhergehenden Ansprüche, **dadurch gekennzeichnet, dass** die radspezifischen Größen der Radschlupf, die Radaufstandskraft, der Radbremsdruck sowie der Radradius sind.

4. Verfahren nach einem der vorhergehenden Ansprüche, **dadurch gekennzeichnet, dass** bei angetriebenen Rädern das Motormoment, welches auf das Rad wirkt, ausgewertet wird.

5. Verfahren nach einem der vorhergehenden Ansprüche, **dadurch gekennzeichnet, dass** die Ermittlung des Kennwertes nur dann erfolgt, wenn kein Reglereingriff stattfindet und der Fahrer bremst.

6. Verfahren nach einem der vorhergehenden Ansprüche, **dadurch gekennzeichnet, dass** der ermittelte Bremsenkennwert gefiltert wird.

7. Verfahren nach einem der vorhergehenden Ansprüche, **dadurch gekennzeichnet, dass** der Bremsenkennwert zur Bestimmung des Sollbremsdruckes aus einem Sollbremsmoment, zur Ermittlung des Radbremsdruckes aus der gemessenen Bremskraft oder des gemessenen Bremsmoments oder zur Abschätzung des Radverhaltens verwendet wird.

8. Verfahren nach einem der vorhergehenden Ansprüche, **dadurch gekennzeichnet, dass** zur Ermittlung des Kennwertes (CP) die folgende Formel verwendet wird:

$$CP = (I*FN*RRAD*CLAM)/PRAD + MMOT/PRAD$$

**9.** Vorrichtung zur Ermittlung eines Bremskennwertes einer Radbremse, mit einer Steuereinheit, welche zur Durchführung wenigstens einer Steuerfunktion den im Zusammenhang zwischen Bremsmoment oder Bremskraft und einer Steuergröße, die die Zuspannung bewirkt, darstellenden Kennwert einer Radbremse auswertet, wobei die Steuereinheit Mittel aufweist, die diesen Bremskennwert radindividuell auf der Basis von radspezifischen Größen ermitteln
**dadurch gekennzeichnet, dass**
die Mittel eine Veränderung des Bremskennwertes nur in einem vorbestimmten Betriebszustand ermitteln, außerhalb dieses Betriebszustandes der ermittelte Wert des Bremskennwertes jedoch beibehalten.

**Claims**

**1.** Method for acquiring a braking characteristic value of a wheel brake, wherein

- the braking characteristic value represents the relationship between the braking torque or braking force and the control variable of a wheel brake which causes the wheel brake to be applied, and
- the braking characteristic value is acquired as a function of operating variables, and
- the braking characteristic value is acquired on a wheel-specific basis as a function of wheel-specific variables,

**characterized in that**
a change in the braking characteristic value takes place only in a prespecified operating state, and outside this operating state the value which is acquired for the braking characteristic value is retained.

**2.** Method according to Claim 1, **characterized in that** the control variable is the braking pressure or an actuation variable of an electric-motor-operated wheel brake.

**3.** Method according to one of the preceding claims, **characterized in that** the wheel-specific variables are the wheel slip, the wheel contact force, the wheel braking pressure and the wheel radius.

**4.** Method according to one of the preceding claims, **characterized in that,** when the wheels are driven, the motor torque which acts on the wheel is evaluated.

**5.** Method according to one of the preceding claims, **characterized in that** the characteristic value is acquired only if no controller intervention takes place and the driver brakes.

**6.** Method according to one of the preceding claims, **characterized in that** the braking characteristic value which is acquired is filtered.

**7.** Method according to one of the preceding claims, **characterized in that** the braking characteristic value is used to determine the setpoint braking pressure from the setpoint braking torque, to acquire the wheel braking pressure from the measured braking force or the measured braking torque or to estimate the wheel behaviour.

**8.** Method according to one of the preceding claims, **characterized in that** the following formula is used to acquire the characteristic value (CP):

$$CP = (I*FN*RRAD*CLAM)/PRAD + MMOT/PRAD$$

**9.** Device for acquiring a braking characteristic value of a wheel brake, having a control unit which, in order to carry out at least one control function, evaluates the characteristic value of a wheel brake which represents the relationship between the braking torque or braking force and a control variable which causes the brake to be applied, wherein the control unit has means which acquire this braking characteristic value individually for each wheel on the basis of wheel-specific variables,

**characterized in that**

the means detect a change in the braking characteristic value in a prespecified operating state, but outside this operating state they retain the value which has been acquired for the braking characteristic value.

**Revendications**

1.  Procédé de détermination du niveau de freinage d'un frein de roue, dans lequel :

    - le niveau de freinage représente l'association entre le couple le freinage ou la force de freinage et la grandeur de commande d'un frein de roue qui a pour effet le serrage du frein de roue,
    - la valeur caractéristique de freinage est déterminée en fonction de grandeurs de fonctionnement et
    - la valeur caractéristique de freinage est déterminée séparément pour chaque roue en fonction de grandeurs spécifiques aux roues,

    **caractérisé en ce que**

    - la valeur caractéristique de freinage n'est modifiée que dans une situation de fonctionnement prédéterminée, la valeur caractéristique de freinage déterminée étant conservée hors de cette situation de fonctionnement.

2.  Procédé selon la revendication 1, **caractérisé en ce que** la grandeur de freinage est la pression de freinage ou une grandeur de commande d'un frein de roue à moteur électrique.

3.  Procédé selon l'une des revendications précédentes, **caractérisé en ce que** les grandeurs spécifiques aux roues sont le patinage des roues, la force d'appui des roues, la pression de freinage des roues ainsi que le rayon des roues.

4.  Procédé selon l'une des revendications précédentes, **caractérisé en ce que** pour les roues motrices, le couple moteur qui agit sur la roue est évalué.

5.  Procédé selon l'une des revendications précédentes, **caractérisé en ce que** la valeur caractéristique n'est déterminée que lorsque la régulation n'agit pas et que le conducteur freine.

6.  Procédé selon l'une des revendications précédentes, **caractérisé en ce que** la valeur caractéristique de freinage déterminée est filtrée.

7.  Procédé selon l'une des revendications précédentes, **caractérisé en ce que** la valeur caractéristique de freinage est utilisée pour déterminer la pression de consigne de freinage à partir d'un couple de consigne de freinage, pour déterminer la pression des freins de roues à partir de la force de freinage mesurée ou du couple de freinage mesuré, ou pour estimer le comportement des roues.

8.  Procédé selon l'une des revendications précédentes, **caractérisé en ce que** pour déterminer la valeur caractéristique (CP), il utilise la formule suivante :

$$CP=(0*FN*RRAD*CLAM)/PRAD+MMOT/PRAD$$

9.  Dispositif de détermination de la valeur caractéristique de freinage d'un frein de roue, qui présente une unité de commande qui, pour exécuter au moins une fonction de commande, évalue la valeur caractéristique d'un frein de roue qui représente la coopération entre le couple de freinage ou la force de freinage et une grandeur de commande qui a pour effet le serrage,
    l'unité de commande présentant des moyens qui déterminent cette valeur caractéristique de freinage séparément pour chaque roue sur base de grandeurs spécifiques aux roues,
    **caractérisé en ce que**
    les moyens déterminent une modification de la valeur caractéristique de freinage uniquement dans une situation de fonctionnement prédéterminée, la valeur caractéristique de freinage déterminée étant conservée hors de cette situation de fonctionnement.

Fig.1

EP 1 263 635 B1

# Fig.2

Start

Einlesen
$F_N$, $P_{VOR}$, $P_{Rad}$, $\lambda_{Rad}$ — 100

$P_{VOR} = 0 \land$
Regler nicht aktiv
? — 102

J

N

$CP_n = CP_{n-1}$ — 104

$$CP_n = \frac{\lambda \cdot F_N \cdot r_{Rad, clam}}{P_{Rad}} + M_{mot}/P_{Rad}$$ — 110

Ausgabe CP — 106

108

Ende

**Fig.3**

Start

| |
|---|
| Msoll xy |

—200

$$Psoll_{xy} = \frac{Msoll_{xy}}{CP}$$

—202

$$T_{xy} = f(Psoll_{xy}, Prad_{xy})$$

—204

Ende

**EP 1 263 635 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19648936 A1

- DE 3909588 A1